# FASCICULE DE BREVET EUROPEEN

(11) **EP 0 418 135 B1**
(45) Date de publication et mention de la délivrance du brevet: **16.02.1994**
(21) Numéro de dépôt: 90402484.1
(22) Date de dépôt: 11.09.1990
(51) Int. Cl.: H02K 5/14

(54) **Machine électrique à collecteur**
Elektrische Maschine mit Stromabnehmer
Electrical machine with collector

(30) Priorité: 12.09.1989 FR 8912203
(43) Date de publication de la demande: 20.03.1991
(73) Titulaire: AUTOMOBILES PEUGEOT, 75116 Paris (FR); AUTOMOBILES CITROEN, 92200 Neuilly-sur-Seine (FR)
(72) Inventeur: Cornu, François, 95220 Herblay (FR)
(74) Mandataire: Fabien, Henri

(56) Documents cités:
- EP-A- 0 072 283
- DE-A- 3 038 031
- DE-C- 967 293
- FR-A- 2 389 253
- GB-A- 2 167 909
- PATENT ABSTRACTS OF JAPAN vol. 8, no. 17 (E-223)(1454) 25 janvier 1984, & JP-A-58 179145 (HITACHI SEISAKUSHO K.K.) 20 octobre 1983,

## Description

L'invention concerne les machines électriques à collecteur, notamment les moteurs électriques de traction et a pour but de faciliter le montage et le calage des balais, ainsi que leur refroidissement.

La machine selon l'invention est du type dans lequel les porte-balais sont fixés sur une pièce amovible pouvant s'extraire sans démonter le palier côté collecteur autour duquel elle est centrée, tel que décrit dans le document JP-A-58 179145

Elle se caractérise en ce que la pièce amovible est constituée d'un anneau cylindrique formant une couronne ouverte à chaque extrémité, montée et fixée sur des portions cylindriques solidaires du palier de l'arbre de la machine, situé du côté du collecteur autour desquelles elle est mobile en rotation avant fixation. Grâce à cette disposition, la couronne et ses porte-balais peuvent être retirés sans qu'il soit nécessaire de démonter le palier. Les portions cylindriques assurent le centrage de la couronne et permettent un calage facile des balais.

On a décrit ci-après, à titre d'exemple non limitatif, un mode de réalisation d'une machine électrique selon l'invention, avec référence aux dessins annexés dans lesquels:

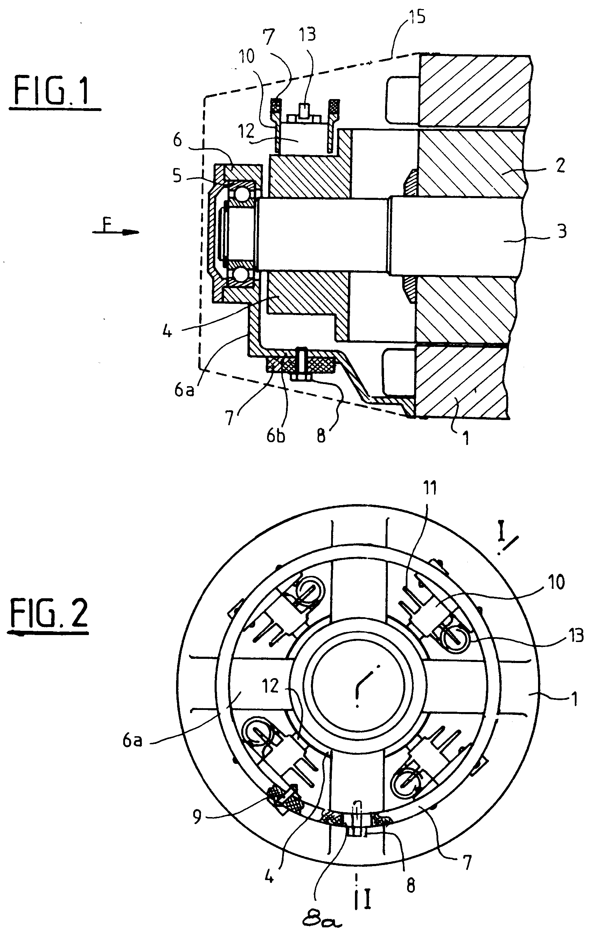

- La Figure 1 est une coupe longitudinale partielle de la machine, suivant I-I de la Figure 2, du côté du collecteur;
- La Figure 2 est une vue suivant la flèche F de la Figure 1;

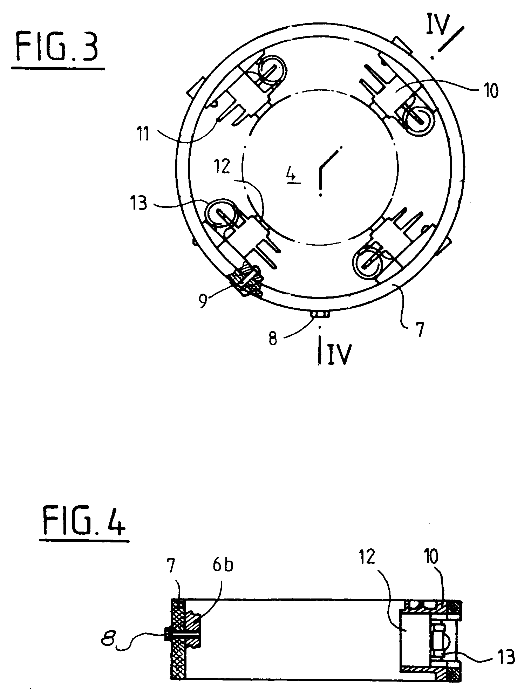

- La Figure 3 est une vue en élévation de la couronne porte-balais;
- La Figure 4 en est une coupe transversale suivant IV-IV de la Figure 3.

Au dessin, on voit la carcasse 1 d'un moteur et en 2 son rotor qui est fixé sur un arbre 3. L'une des extrémités de cet arbre porte un collecteur 4 et est montée à rotation par l'intermédiaire d'un palier 5 dans un carter-palier 6; ce carter présente quatre jambes de liaison 6a par l'intermédiaire desquelles il est fixé à la carcasse 1 et qui présentent chacune une portion cylindrique 6b.

Sur les portions 6b du carter 6 est montée une pièce 7 en forme d'anneau cylindrique formant une couronne ouverte à chacune de ses extrémités. Cette couronne 7 est en un matériau isolant électriquement et peut être immobilisée par une vis 8. Sur cette couronne sont fixés par des vis ou des rivets 9 des porte-balais métalliques 10 qui sont munis d'ailettes de refroidissement 11. Dans chacun de ces porte-balais est monté un balai 12 qui est maintenu en appui contre le collecteur 4 par un ressort 13. Les liaisons électriques des balais se font par des fils conducteurs souples non représentés.

Un capotage 15 recouvre l'ensemble formé par le carter 6, la couronne 7, les porte-balais 10 et les câbles; il assure une semi-étanchéité avec la carcasse 1.

On voit de la description qui précède que le montage des balais est très simple, ce qui permet un gain de temps de fabrication et diminue le temps d'entretien car il n'y a pas de palier à démonter.

L'ensemble couronne 7 et porte-balais 10 préalablement assemblé est monté d'un seul bloc, les porte-balais 10 passant entre les jambes du carter 6a. Ces porte-balais et leurs ailettes de refroidissement 11 sont totalement dégagés et dans le flux d'air de refroidissement. Le calage de la machine, c'est-à-dire l'alignement de l'axe des balais sur la ligne neutre magnétique de la machine se fait très facilement en faisant pivoter la couronne 7 sur les parties cylindriques 6b des jambes 6a, ceci avant serrage de la vis 8 traversant la couronne 7 par une boutonnière 8a permettant le débattement angulaire relatif de la vis et de la couronne.

## Revendications

1. Machine électrique à collecteur, comportant des porte-balais (10) fixés sur une pièce amovible (7) pouvant s'extraire sans démonter le palier côté collecteur autour duquel elle est centrée, caractérisée en ce que la pièce amovible (7) est constituée d'un anneau cylindrique formant une couronne ouverte à ses deux extrémités montée et fixée sur des portions cylindriques (6b) solidaires du palier (6) de l'arbre (3) de la machine, situé du côté du collecteur autour desquelles elle est mobile en rotation avant fixation.

2. Machine selon la revendication 1, caractérisée en ce que les portions (6b) font partie de jambes de liaison (6a) assurant la fixation du palier (6) à la carcasse (1).

3. Machine selon la revendication 2, caractérisée en ce que les porte-balais sont disposés entre les jambes (6a), se trouvant ainsi dans le flux d'air de refroidissement.

4. Machine selon l'une des revendications 1 à 3, caractérisée en ce que les porte-balais (10) sont munis d'ailettes de refroidissement (11).

## Claims

1. An electric commutating machine, comprising brush holders (10) fastened to a removable part (7) which can be extracted without dismantling the bearing on the commutator side around which it is centred, characterised in that the removable part (7) consists of a cylindrical ring forming a crown open at both ends, mounted on and fastened to cylindrical portions (6b) integral with the bearing (6) of the shaft (3) of the machine, located on the commutator side around which it can be moved in rotation before fastening.

2. A machine according to Claim 1, characterised in that the portions (6b) form part of connecting legs (6a) ensuring that the bearing (6) is fastened to the frame (1).

3. A machine according to Claim 2, characterised in that the brush holders are arranged between the legs (6a), being thus located in the flow of cooling air.

4. A machine according to one of Claims 1 to 3, characterised in that the brush holders (10) are provided with cooling fins (11).

## Patentansprüche

1. Elektrische Maschine mit Kollektor, umfassend an ein wegnehmbares Teil (7) montierte Bürstenträger (10), die herausgenommen werden können, ohne daß das Lager auf der Seite des Kollektors ausgebaut werden muß, um das es zentriert ist, dadurch gekennzeichnet, daß das wegnehmbare Teil (7) aus einem zylindrischen Ring besteht, der einen an seinen beiden Enden offenen Kranz bildet und montiert und befestigt ist an zylindrischen Abschnitten (6b), die fest mit dem Lager (6) der Welle (3) der Maschine verbunden sind, das sich auf der Seite des Kollektors befindet, um die er vor der Befestigung in Drehung beweglich ist.

2. Maschine nach Anspruch 1, dadurch gekennzeichnet, daß die Abschnitte (6b) Teil von Verbindungsstreben (6a) sind, welche die Befestigung des Lagers (6) am Gehäuse (1) sicherstellen.

3. Maschine nach Anspruch 2, dadurch gekennzeichnet, daß die Bürstenträger zwischen den Streben (6a) angeordnet sind und sich somit im Kühlluftfluß befinden.

4. Maschine nach einem der Ansprüche 1 bis 3, dadurch gekennzeichnet, daß die Bürstenträger (10) mit Kühlrippen (11) versehen sind.
